# FASCICULE DE BREVET EUROPEEN

(11) **EP 2 382 478 B1**
(45) Date de publication et mention de la délivrance du brevet: **04.07.2018**
(21) Numéro de dépôt: 10704391.1
(22) Date de dépôt: 21.01.2010
(51) Int. Cl.: G01P 13/02, G05D 1/00

(54) **SYSTÈME DE SÉLECTION D'UNE DONNÉE REPRÉSENTATIVE D'UN PARAMÈTRE DE L'AIR, SYSTÈME DE COMMANDE DE MOTEUR, AÉRONEF COMPRENANT DE TELS SYSTÈMES ET PROCÉDÉ ASSOCIÉ**
SYSTEM ZUR AUSWAHL VON REPRÄSENTATIVEN DATEN EINES LUFTPARAMETERS, ANTRIEBSSTEUERUNG, FLUGZEUG MIT SOLCHEM SYSTEM UND ENTSPRECHENDE METHODE
SELECTION SYSTEM OF A DATA REPRESENTATIVE OF AN AIR PARAMETER, ENGINE COMMAND SYSTEM, AIRCRAFT HAVING SUCH SYSTEMS AND ASSOCIATED METHOD

(30) Priorité: 28.01.2009 FR 0950533
(43) Date de publication de la demande: 02.11.2011
(73) Titulaire: Airbus Operations (S.A.S.), 31060 Toulouse (FR)
(72) Inventeur: FEAU, Julien, F-31000 Toulouse (FR)
(74) Mandataire: Santarelli
(86) Numéro de dépôt international: PCT/FR2010/000055
(87) Numéro de publication internationale: WO 2010/086525

(56) Documents cités:
- EP-A- 0 393 730
- FR-A- 2 850 356
- FR-A- 2 916 290
- CALIA A ET AL: "Air Data Failure Management in a Full-Authority Fly-By-Wire Control System" CONTROL APPLICATIONS, 2006 IEEE INTERNATIONAL CONFERENCE ON, IEEE, PI, 1 octobre 2006 (2006-10-01), pages 3277-3281, XP031011672 ISBN: 978-0-7803-9795-8

## Description

L'invention concerne un système de sélection d'une donnée représentative d'un paramètre de l'air, un système de commande de moteur, un aéronef comprenant de tels systèmes et un procédé associé.

Il est connu de prendre en compte les données issues d'une pluralité de sources redondantes de mesure d'un paramètre de l'air (telle que par exemple la pression totale, la pression statique ou la température) et de sélectionner parmi ces données celle qui sera finalement utilisée, par exemple au sein d'un calculateur de commande d'un moteur (en général dans ce cas dans le but de déterminer des paramètres tels que l'altitude standard, le nombre de Mach et la différence entre la température effective et la température standard).

Des systèmes effectuant ces opérations sont par exemple décrits dans les demandes de brevet FR 2 850 356 et FR 2 916 290.

Dans ces systèmes, la robustesse de la logique de sélection est améliorée grâce au nombre important de comparaisons entre sources. En outre, afin de respecter la contrainte d'isolation des moteurs alors que ces systèmes prévoyaient toujours la sélection de la donnée à utiliser au sein des calculateurs de commande du moteur, on aboutissait à une conception relativement complexe impliquant soit l'échange d'informations d'exactitude (relatives chacune à une donnée issue d'une source du fuselage), soit l'échange de résultats de comparaison.

Cette complexité se retrouvait dans les logiques de sélection utilisées, basées sur des diagrammes répertoriant les différents types de situations envisageables du fait de la comparaison deux à deux des différentes sources.

La présente invention vise à proposer une logique de sélection plus simple, tout en permettant de conserver une bonne robustesse et de pouvoir respecter la contrainte d'isolation des moteurs.

Dans ce but notamment, l'invention propose un système de sélection d'une donnée représentative d'un paramètre de l'air, selon la revendication 1. La logique de sélection ainsi définie permet, de manière particulièrement simple, de choisir la source à utiliser parmi celles délivrant les données les plus sûres.

En pratique, une autre source est par exemple en accord avec la source concernée si la valeur absolue de la différence entre la donnée délivrée par la source concernée et la donnée délivrée par l'autre source est inférieure à un seuil prédéterminé.

Dans le présent contexte, on peut prévoir que les moyens pour choisir la donnée sélectionnée soient aptes à être inactifs lorsque lesdits moyens pour déterminer identifient quatre sources en accord par paires, les sources d'une paire n'étant pas en accord avec les sources de l'autre paire. Il est en effet dans ce cas impossible de trancher entre les deux paires de sources en accord.

Lesdites certaines sources sont par exemple associées à un fuselage de l'aéronef afin de pouvoir la plupart du temps sélectionner une même source pour les différents moteurs (ce qui n'est pas possible avec les sources des moteurs en raison de la contrainte d'isolation des moteurs).

On peut prévoir par exemple que les sources de la pluralité (formée d'au moins trois sources en pratique) soient situées au niveau d'un fuselage de l'aéronef, ce qui permet d'éviter de placer des sources au niveau des moteurs.

En variante, au moins une des sources de la pluralité peut être située au niveau d'un moteur de l'aéronef. Cette source peut ainsi être utilisée en cas de problème lors de la sélection de la donnée.

L'invention propose également un système de commande d'un moteur d'aéronef, caractérisé en ce qu'il comprend un système de sélection d'une donnée comme évoqué ci-dessus et des moyens pour déterminer une instruction de commande du moteur en fonction de la donnée sélectionnée.

L'invention prévoit aussi un aéronef comprenant l'un des systèmes envisagés ci-dessus.

L'invention propose ainsi un procédé de sélection d'une donnée représentative d'un paramètre de l'air parmi une pluralité de données représentatives chacune d'une valeur mesurée du paramètre et délivrées par une pluralité respective de sources, caractérisé par les étapes suivantes réalisées dans un calculateur de sélection distinct d'un calculateur de commande auquel la donnée sélectionnée est destinée :
- détermination, pour certaines sources au moins, du nombre d'autres sources de la pluralité en accord avec la source concernée ;
- choix de la donnée sélectionnée parmi les données délivrées par les sources pour lesquelles le nombre d'accord déterminé est maximum.

On peut prévoir en outre que l'étape de choix ne soit pas mise en oeuvre lorsque l'étape de détermination identifie quatre sources en accord par paires, les sources d'une paire n'étant pas en accord avec les sources de l'autre paire.

D'autres caractéristiques et avantages de l'invention apparaîtront mieux à la lecture de la description qui suit, faite en référence aux dessins annexés dans lesquels :
- la figure 1 représente un système de traitement des données air selon un premier exemple de mise en oeuvre de l'invention ;
- la figure 2 représente la logique de sélection des données dans le système de la figure 1 ;
- la figure 3 représente un système de traitement des données air selon un second exemple de mise en oeuvre de l'invention ;
- la figure 4 représente de la logique de sélection des données dans le système de la figure 3.

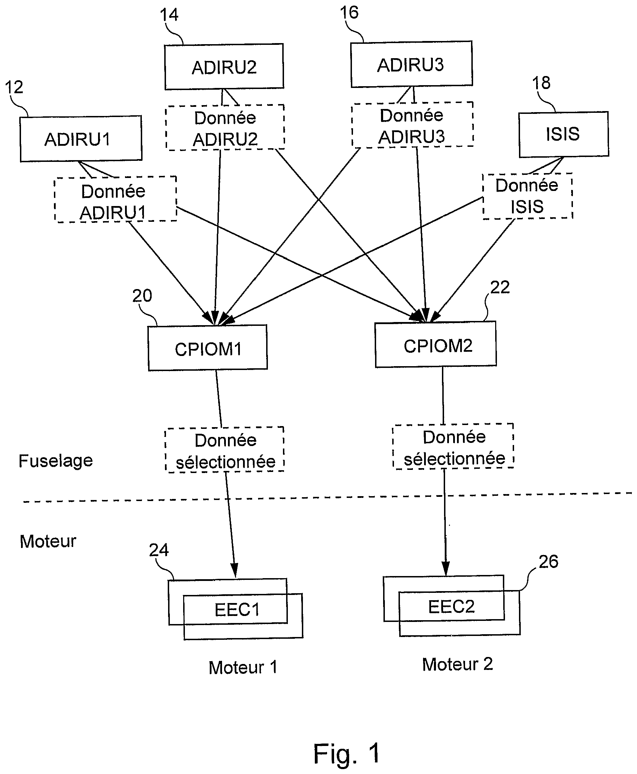

La **figure 1** représente les éléments principaux d'un système de traitement des données air dans un aéronef. Un tel système permet notamment la sélection d'une donnée représentative d'un paramètre de l'air parmi une pluralité de données issues de sources redondantes en vue de l'utilisation de la donnée sélectionnée, par exemple dans le cadre de la commande d'un moteur.

Ce système comprend tout d'abord une pluralité de calculateurs situés au niveau du fuselage de l'aéronef :
- trois calculateurs 12, 14, 16 associés à des sources situées sur le fuselage, généralement dénommés ADIRU (pour *"Air Data and Inertial Reference Unit*") ;
- un calculateur 18 de type ISIS (pour "*Integrated Standby Instrument System*") qui traite une source de données air de réserve ;
- des calculateurs génériques 20, 22, par exemple de type CPIOM (pour "*Core Processing Imput*/*Output Module*") qui permettent ici notamment la sélection d'une données parmi celles reçues des calculateurs précédemment mentionnés comme décrit en détail dans la suite.

On considère ici comme fuselage de l'aéronef l'ensemble des parties de l'aéronef à l'exception du ou des moteurs, qu'il s'agisse de moteurs portés par les ailes ou d'un moteur situé au niveau de la queue de l'aéronef.

Du fait de leur fonction respective dans le cadre de la présente description, on dénommera "*calculateurs de sélection*" 20, 22 les calculateurs de type CPIOM et "*calculateurs de mesure*" 12, 14, 16, 18 les calculateurs de type ADIRU et ISIS, sans d'ailleurs que cela n'exclue que ces calculateurs puissent en pratique réaliser d'autres fonctions.

Chacun des calculateurs de mesure ADIRU1 12, ADIRU2 14, ADIRU3 16 et ISIS 18 détermine une donnée représentative du paramètre de l'air concerné (par exemple la pression totale) en fonction d'une mesure effectuée par un capteur associé au calculateur et situé au niveau du fuselage de l'aéronef.

Ces différents calculateurs de mesure forment ainsi des sources redondantes et indépendantes de données représentatives du paramètre concerné.

Chaque calculateur de sélection 20, 22 reçoit les différentes données émises indépendamment par chaque calculateur de mesure 12, 14, 16, 18 et procède à la sélection d'une donnée parmi celles-ci selon la logique expliquée en détail ci-après.

La donnée sélectionnée est alors émise à destination d'un calculateur de commande 24, 26 associé à un moteur et situé au niveau de celui-ci.

Dans l'exemple représenté sur la figure 1, le calculateur de sélection CPIOM1 20 est associé au calculateur de commande EEC1 24, tandis que le calculateur de sélection CPIOM2 22 est associé (c'est-à-dire émet la donnée sélectionnée à destination du) calculateur de commande EEC2 26.

On remarque que les échanges de données mentionnés ci-dessus (tant entre les calculateurs de mesure et le calculateur de sélection concerné qu'entre le calculateur de sélection et le calculateur de commande du moteur) sont mis en oeuvre grâce au bus d'échange de données reliant classiquement les calculateurs entre eux au sein d'un aéronef.

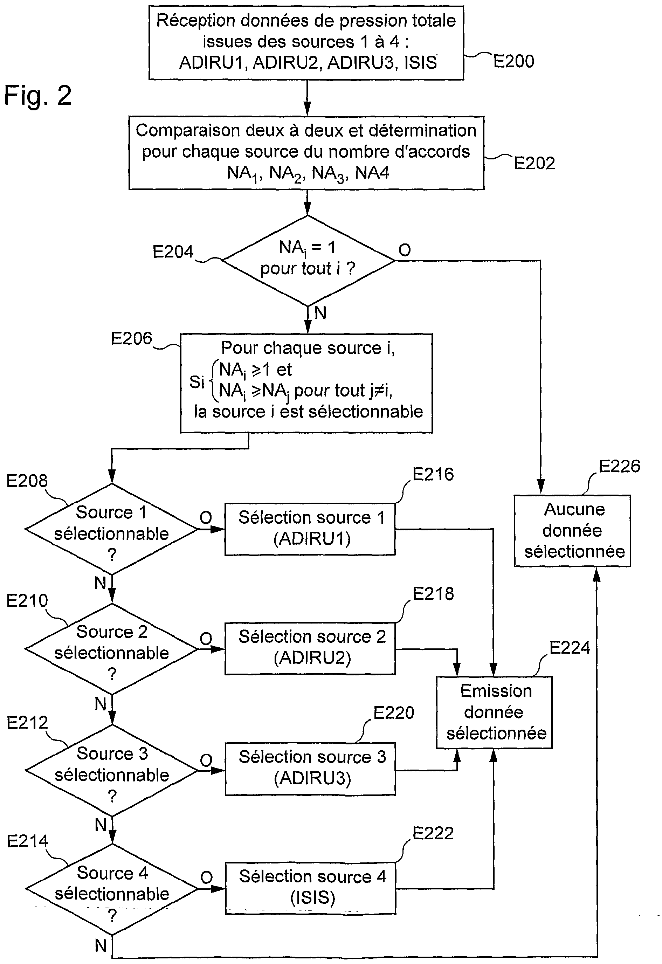

La logique de mise en oeuvre de la sélection réalisée dans chaque calculateur de sélection de type CPIOM 20, 22 est à présent décrite en référence à la figure 2.

La **figure 2** représente ainsi les étapes principales du fonctionnement d'un calculateur de sélection 20, 22 en ce qui concerne le traitement et la sélection parmi les données représentatives de la pression totale. Le traitement des autres paramètres concernés (par exemple la pression statique et la température) peut être réalisé selon une logique identique.

Le procédé de traitement commence à l'étape E200 par la réception des données représentatives de la pression totale en provenance des calculateurs de mesure 12, 14, 16, 18 associés chacun à une source : ADIRU1, ADIRU2, ADIRU3, ISIS, désignés respectivement comme sources 1 à 4 ci-après.

Le calculateur de sélection concerné effectue alors à l'étape E202 la comparaison deux à deux des données reçues et peut ainsi déterminer, pour chaque source i, le nombre d'autres sources en accord NAᵢ, deux sources étant en accord si leurs données sont valides et diffèrent d'une valeur inférieure (en valeur absolue) à un seuil, par exemple de 38 mb pour la pression totale.

On vérifie alors à l'étape E204 qu'on ne se trouve pas dans le cas où tous les nombres d'accords NAᵢ sont égaux à 1 (qui se produit lorsque les sources sont en accord par paires mais en désaccord d'une paire à l'autre).

Si tous les nombres d'accords NAᵢ sont égaux à 1, on considère qu'on ne peut pas sélectionner de manière satisfaisante une valeur (puisque rien ne permet de favoriser une paire par rapport à l'autre) et on passe à l'étape E226 qui correspond à une absence de sélection possible (décrite plus bas).

S'il existe au moins une source i pour laquelle le nombre d'accords NAᵢ est différent de 1 (réponse négative à l'étape E204), on procède à l'étape E206 au cours de laquelle on prend successivement chaque source en considération : si le nombre d'accords NAᵢ pour la source considérée est d'une part supérieur ou égal à 1 et d'autre part supérieur ou égal aux nombres d'accords NAⱼ de toutes les autres sources, on considère que la source i est sélectionnable.

Cela revient à dire que sont sélectionnables toutes les sources qui atteignent un nombre d'accords non nul et maximum parmi les quatre sources.

Lorsque ce traitement est effectué, on passe à l'étape E208 à laquelle on détermine si la source 1 (correspondant au calculateur 12 ADIRU1) est sélectionnable, auquel cas on sélectionne la source 1 (étape E216).

Dans la négative à l'étape E208, on détermine à l'étape E210 si la source 2 est sélectionnable, auquel cas on sélectionne la source 2 (associée au calculateur 14 ADIRU2) à l'étape E218.

Si la réponse est négative à l'étape E210, on détermine à l'étape E212 si la source 3 est sélectionnable, auquel cas on sélectionne la source 3 (correspondant au calculateur 16 ADIRU3) à l'étape E220.

Si la source 3 n'est pas sélectionnable à l'étape E212, on détermine à l'étape E214 si la source 4 (correspondant au calculateur de mesure 18 ISIS) est sélectionnable, auquel cas on sélectionne la donnée issue de ce calculateur 18 (source 4) à l'étape E222.

Quelle que soit la donnée sélectionnée (étapes E216 à E222), on émet alors cette donnée sélectionnée à destination du calculateur de commande 24, 26 associé au calculateur de sélection concerné 20, 22.

En utilisant cette solution pour les différents paramètres de l'air, chaque calculateur de commande 24, 26 peut ainsi déterminer les informations de commande destinées au moteur (en particulier l'information de commande de la poussée du moteur) au moyen de paramètres (tels que l'altitude standard, le nombre de Mach et la différence entre la température effective et la température standard) obtenus chacun dans une table de correspondance respective en fonction des données représentatives des paramètres de l'air (pression statique, pression totale et température) déterminées comme indiqué ci-dessus.

En revanche, si même la source 4 n'est pas sélectionnable (auquel cas, aucune des sources n'est sélectionnée, ce qui se produit lorsqu'aucun accord entre sources n'a été détecté), on passe à l'étape E226 relative à l'absence de sélection.

Le traitement effectué à l'étape E226 en l'absence de sélection de données peut consister par exemple à reconduire la dernière donnée sélectionnée pendant une durée déterminée (par exemple 5 secondes), puis à émettre un signal d'invalidité de la donnée une fois cette durée écoulée (auquel cas, le calculateur de commande 24, 26 recevra cette information d'invalidité de la donnée et basculera en mode de fonctionnement par défaut, c'est-à-dire sans connaissance de la valeur du paramètre).

On comprend que la logique de sélection qui vient d'être décrite permet de sélectionner la donnée issue d'une des sources qui sont en accord avec le plus grand nombre d'autres sources, le choix entre les différentes sources ayant atteint ce nombre d'accords maximum étant imposé par convention, c'est-à-dire de manière prédéterminée, afin que les calculateurs de sélection 20, 22 choisissent dans ce cas la même donnée, ce qui permet un fonctionnement symétrique des moteurs dont les calculateurs de commande reçoivent cette donnée.

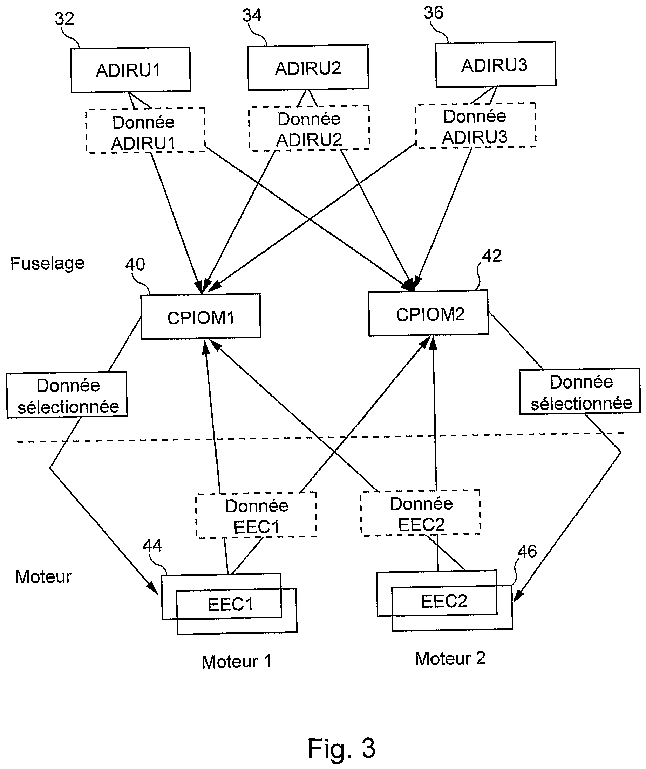

La **figure 3** représente les éléments principaux d'un système de traitement des données représentatives des paramètres de l'air selon un second mode de réalisation.

Dans ce second mode de réalisation, trois calculateurs de mesure ADIRU1, ADIRU2, ADIRU3 (respectivement référencés dans la suite 32, 34, 36) déterminent chacun des données représentatives d'une valeur de chacun des paramètres mesurés (pression statique, pression totale, température) sur la base de mesures effectuées par des capteurs associés au fuselage de l'aéronef.

Les trois calculateurs de mesure 32, 34, 36 constituent ainsi des sources redondantes et indépendantes des données air.

Dans le présent mode de réalisation, des calculateurs de commande de moteur 44, 46, associés chacun à un moteur distinct de l'aéronef, délivrent également chacun des données représentatives des paramètres de l'air, déterminées au moyen de capteurs associés au (c'est-à-dire ici situés sur le) moteur concerné.

Le système représenté à la figure 3 comprend en outre deux calculateurs de sélection 40, 42, situés ici au niveau du fuselage de l'aéronef, et qui reçoivent chacun les données représentatives de chaque paramètre de l'air des cinq sources précédemment mentionnées, à savoir les trois calculateurs de mesure 32, 34, 36 et les deux calculateurs de commande 44, 46.

Les données sont par exemple échangées entre les calculateurs au moyen du bus avionique qui équipe l'aéronef.

On rappelle par ailleurs que le vocabulaire "*calculateur de mesure*", "*calculateur de sélection*" s'intéresse pour les calculateurs concernés à la fonction mise en oeuvre dans le cadre de la présente description, sans exclure toutefois que ces calculateurs puissent mettre en oeuvre d'autres fonctions au sein de l'aéronef.

Chaque calculateur de sélection 40, 42 sélectionne (pour chaque paramètre) l'une des cinq données reçues des différents calculateurs sur la base de la logique de sélection décrite ci-après et émet (toujours pour chaque paramètre) la donnée sélectionnée à destination du calculateur de commande 44, 46 associée au calculateur de sélection concerné 40, 42 (le calculateur de sélection CPIOM1 40 étant associé au calculateur de commande EEC1 44 et le calculateur de sélection CPIOM2 42 étant associé au calculateur de commande EEC2 46).

Chaque calculateur de commande 44, 46 reçoit ainsi pour chaque paramètre une donnée sélectionnée représentative de la valeur de ce paramètre et peut ainsi déterminer, à l'aide par exemple de tables de correspondance, d'autres paramètres utilisés pour déterminer les informations de commande destinées au moteur, tels que par exemple l'altitude standard, le nombre de Mach et la différence entre la température effective et la température standard.

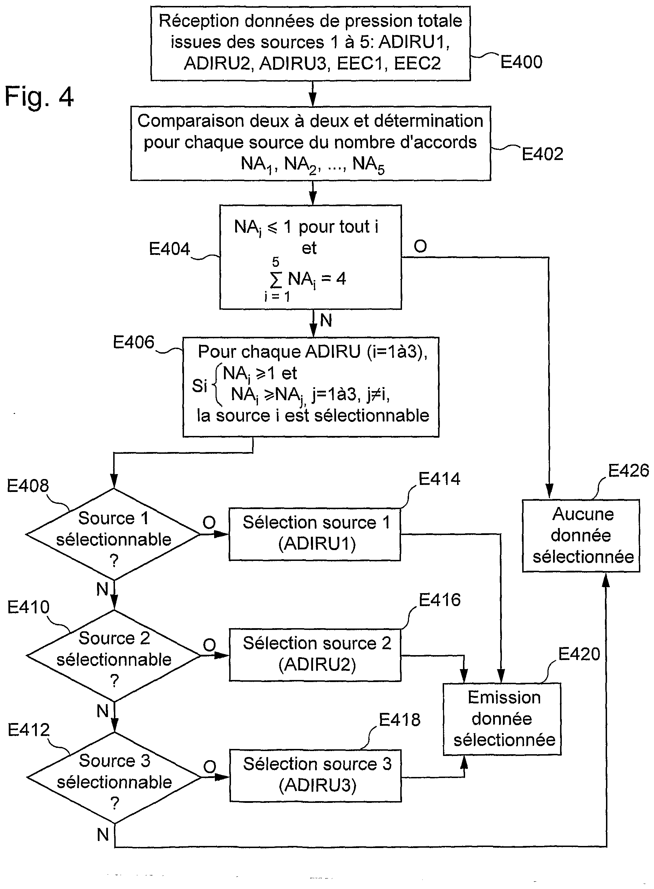

La **figure 4** représente les étapes principales de mise en oeuvre de la sélection d'une donnée représentative d'un paramètre de l'air (ici la température) telle qu'elle est réalisée au sein de chacun des deux calculateurs de sélection 40, 42.

Comme déjà indiqué, le calculateur de sélection concerné 40, 42 reçoit les données représentatives des valeurs de température mesurée émises par chacune des cinq sources indépendantes (ADIRU1, ADIRU2, ADIRU3, EEC1, EEC2, respectivement désignées ci-après sources 1 à 5) à l'étape E400.

Le calculateur de sélection 40, 42 procède alors à l'étape E402 à la comparaison deux à deux des données reçues et détermine ainsi pour chaque source i le nombre NAᵢ d'autres sources en accord avec la source i concernée (les valeurs des NAᵢ variant donc entre 0 et 4). On considère par exemple que deux données de température sont en accord lorsqu'elles sont valides et lorsque la valeur absolue de leur différence est inférieure à 5 C°.

On détermine alors à l'étape E404 si toutes les valeurs NAᵢ sont égales soit à 0, soit à 1 et si la somme de toutes les valeurs NAᵢ vaut 4 (ce qui signifierait que deux paires de sources sont accord dans chaque paire seulement et qu'on ne peut donc trancher quant à une donnée estimant correctement la valeur du paramètre).

Dans le cas d'une détermination positive à l'étape E404, on passe à l'étape E422 de traitement des cas d'impossibilité de sélection d'une source (expliqué en détail plus loin).

Dans le cas d'une détermination négative à l'étape E404, on passe à l'étape E406 au cours de laquelle on vérifie pour chaque source correspondant à un calculateur de mesure situé au niveau du fuselage (c'est-à-dire pour chaque ADIRU, ou pour chaque source i avec i compris entre 1 et 3) d'une part si le nombre d'accords NAᵢ associé est supérieur ou égal à 1 et, d'autre part, si ce nombre d'accords NAᵢ est supérieur ou égal aux nombres d'accords NAⱼ obtenus pour les autres ADIRU (c'est-à-dire lorsque j prend les valeurs différentes de i comprises entre 1 et 3).

Si la condition précédemment mentionnée est vérifiée (c'est-à-dire lorsque le nombre d'accords NAᵢ de la source i considérée est le plus grand nombre d'accords non-nul rencontré parmi les ADIRU), on considère que la source i est sélectionnable.

Lorsque la détermination qui vient d'être expliquée est réalisée pour toutes les sources associées au fuselage (ADIRU), on procède à l'étape E408 à laquelle on vérifie s'il a été déterminé précédemment que la source 1 (donnée issue du calculateur de mesure 32 ADIRU1) est sélectionnable, auquel cas, on procède à l'étape E414 à la sélection de la source 1 (c'est-à-dire de la donnée issue du calculateur de mesure 32).

Si la source 1 n'est pas sélectionnable, on procède à l'étape E410 à laquelle on vérifie si la source 2 est sélectionnable : dans l'affirmative, on sélectionne la source 2 (c'est-à-dire la donnée émise par le calculateur de mesure 34, également dénommé ADIRU2) à l'étape E416.

Si on détermine à l'étape E410 que la source 2 n'est pas sélectionnable, on vérifie si la source 3 est sélectionnable à l'étape E412 ; dans l'affirmative, on sélectionne la donnée correspondant à la source 3 (c'est-à-dire la donnée émise par le calculateur de mesure 36, également dénommé ADIRU3) à l'étape E418.

Si une donnée a été sélectionnée (étapes E414, E416 ou E418), on procède à l'étape E420 à l'émission de cette donnée sélectionnée à destination du calculateur de commande 44, 46 associé aux calculateurs de sélection concernés 40, 42.

Si en revanche il a été déterminé à l'étape E412 que même la source 3 n'est pas sélectionnable, on procède à l'étape E422 déjà mentionnée pour le traitement du cas où il est impossible de sélectionner une donnée.

On peut prévoir par exemple pour la mise en oeuvre de l'étape E422 que la dernière valeur de température soit reconduite pendant une durée prédéterminée (par exemple 5 secondes), durée à la fin de laquelle le calculateur de sélection 40, 42 émettra à destination du calculateur de commande associé 44, 46 une information d'invalidité de la donnée sélectionnée émise précédemment.

Le calculateur de commande concerné 44, 46 pourra alors par exemple soit sélectionner la donnée générée par sa propre source, soit passer en mode de fonctionnement par défaut si sa propre source est indisponible.

Les modes de réalisation qui précèdent ne sont que des exemples possibles de mise en oeuvre de l'invention.

## Revendications

1. Système de sélection d'une donnée représentative d'un paramètre de l'air, pour un aéronef, comprenant une pluralité de sources (12,14,16,18 ; 32,34,36,44,46) qui sont chacune aptes à délivrer une donnée représentative d'une valeur mesurée du paramètre,
**caractérisé en ce qu'**il comporte un calculateur de sélection (20,22 ; 40,42) comportant :
- des moyens pour déterminer, pour certaines sources au moins, le nombre d'autres sources de la pluralité en accord avec la source concernée ;
- des moyens pour choisir la donnée sélectionnée parmi les données délivrées par les sources pour lesquelles le nombre d'accord déterminé est maximum ;
ledit calculateur de sélection (20,22 ; 40,42) étant distinct d'un calculateur de commande (24,26 ; 44,46) de moteur de l'aéronef, auquel la donnée sélectionnée est destinée.

2. Système de sélection selon la revendication 1, **caractérisé en ce qu'**une autre source est en accord avec la source concernée si la valeur absolue de la différence entre la donnée délivrée par la source concernée et la donnée délivrée par l'autre source est inférieure à un seuil prédéterminé.

3. Système de sélection selon la revendication 1 ou 2, **caractérisé en ce que** les moyens pour choisir la donnée sélectionnée sont aptes à être inactifs lorsque lesdits moyens pour déterminer identifient quatre sources en accord par paires, les sources d'une paire n'étant pas en accord avec les sources de l'autre paire.

4. Système de sélection selon l'une des revendications 1 à 3, **caractérisé en ce que** lesdites certaines sources (12,14,16,18 ; 32,34,36) sont associées à un fuselage de l'aéronef.

5. Système de sélection selon l'une des revendications 1 à 4, **caractérisé en ce que** les sources de la pluralité sont situées au niveau d'un fuselage de l'aéronef.

6. Système de sélection selon l'une des revendications 1 à 4, **caractérisé en ce qu'**une au moins des sources de la pluralité est située au niveau d'un moteur (Moteur 1, Moteur 2) de l'aéronef.

7. Système de commande d'un moteur d'aéronef, **caractérisé en ce qu'**il comprend :
- un système de sélection d'une donnée selon l'une des revendications 1 à 6,
- des moyens pour déterminer une instruction de commande du moteur en fonction de la donnée sélectionnée.

8. Aéronef comprenant un système selon l'une des revendications 1 à 7.

9. Procédé de sélection d'une donnée représentative d'un paramètre de l'air pour un aéronef parmi une pluralité de données représentatives chacune d'une valeur mesurée du paramètre et délivrées par une pluralité respective de sources (12,14,16,18 ; 32,34,36,44,46), **caractérisé par** les étapes suivantes réalisées dans un calculateur de sélection (20,22 ; 40,42) distinct d'un calculateur de commande d'un moteur d'aéronef (24,26 ; 44,46) auquel la donnée sélectionnée est destinée :
- détermination, pour certaines sources au moins, du nombre d'autres sources de la pluralité en accord avec la source concernée (E202, E402);
- choix de la donnée sélectionnée parmi les données délivrées par les sources pour lesquelles le nombre d'accord déterminé est maximum.

10. Procédé selon la revendication 9, **caractérisé en ce que** l'étape de choix n'est pas mise en oeuvre lorsque l'étape de détermination identifie quatre sources en accord par paires, les sources d'une paire n'étant pas en accord avec les sources de l'autre paire.

## Patentansprüche

1. System zur Auswahl eines repräsentativen Datums eines Luftparameters für ein Flugzeug, umfassend eine Vielzahl von Quellen (12, 14, 16, 18; 32, 34, 36, 44, 46), die jeweils geeignet sind, ein repräsentatives Datum eines gemessenen Werts des Parameters zu liefern,
**dadurch gekennzeichnet, dass** es einen Auswahlrechner (20, 22; 40, 42) umfasst, umfassend:
- Mittel, um für mindestens gewisse Quellen die Anzahl weiterer Quellen der Vielzahl in Übereinstimmung mit der betreffenden Quelle zu bestimmen;
- Mittel, um das ausgewählte Datum unter den Daten auszuwählen, die von den Quellen geliefert werden, für die die bestimmte Übereinstimmungszahl maximal ist;
wobei sich der Auswahlrechner (20, 22; 40, 42) von einem Steuerungsrechner (24, 26; 44, 46) eines Motors des Flugzeugs, für den das ausgewählte Datum bestimmt ist, unterscheidet.

2. Auswahlsystem nach Anspruch 1, **dadurch gekennzeichnet, dass** eine weitere Quelle mit der betreffenden Quelle übereinstimmt, wenn der Absolutwert der Differenz zwischen dem von der betreffenden Quelle gelieferten Datum und dem von der weiteren Quelle gelieferten Datum kleiner als eine vorbestimmte Grenze ist.

3. Auswahlsystem nach Anspruch 1 oder 2, **dadurch gekennzeichnet, dass** die Mittel zur Auswahl des ausgewählten Datums geeignet sind, inaktiv zu sein, wenn die Mittel zur Bestimmung vier paarweise übereinstimmende Quellen identifizieren, wobei die Quellen eines Paars mit den Quellen des anderen Paars nicht übereinstimmen.

4. Auswahlsystem nach einem der Ansprüche 1 bis 3, **dadurch gekennzeichnet, dass** die gewissen Quellen (12, 14, 16, 18; 32, 34, 36) einem Rumpf des Flugzeugs zugeordnet sind.

5. Auswahlsystem nach einem der Ansprüche 1 bis 4, **dadurch gekennzeichnet, dass** die Quellen der Vielzahl im Bereich eines Rumpfs des Flugzeugs angeordnet sind.

6. Auswahlsystem nach einem der Ansprüche 1 bis 4, **dadurch gekennzeichnet, dass** mindestens eine der Quellen der Vielzahl im Bereich eines Motors (Motor 1, Motor 2) des Flugzeugs angeordnet ist.

7. Steuerungssystem eines Flugzeugmotors, **dadurch gekennzeichnet, dass** es umfasst:
- ein System zur Auswahl eines Datums nach einem der Ansprüche 1 bis 6,
- Mittel zur Bestimmung eines Steuerungsbefehls des Motors in Abhängigkeit von dem ausgewählten Datum.

8. Flugzeug, umfassend ein System nach einem der Ansprüche 1 bis 7.

9. Verfahren zur Auswahl eines repräsentativen Datums eines Luftparameters für ein Flugzeug unter einer Vielzahl von Daten, die jeweils für einen gemessenen Wert des Parameters repräsentativ sind und jeweils von einer Vielzahl von Quellen (12, 14, 16, 18; 32, 34, 36, 44, 46) geliefert werden, **gekennzeichnet durch** die folgenden Schritte, die in einem Auswahlrechner (20, 22; 40, 42), der sich von einem Steuerungsrechner eines Flugzeugmotors (24, 26; 44, 46) unterscheidet, für den das ausgewählte Datum bestimmt ist, durchgeführt werden:
- für mindestens gewisse Quellen Bestimmung der Anzahl weiterer Quellen der Vielzahl in Übereinstimmung mit der betreffenden Quelle (E202, E402);
- Auswahl des ausgewählten Datums unter den Daten, die von den Quellen geliefert werden, für die die bestimmte Übereinstimmungszahl maximal ist.

10. Verfahren nach Anspruch 9, **dadurch gekennzeichnet, dass** der Auswahlschritt nicht eingesetzt wird, wenn der Bestimmungsschritt vier paarweise übereinstimmende Quellen identifiziert, wobei die Quellen eines Paars nicht mit den Quellen des anderen Paars übereinstimmen.

## Claims

1. A system for selecting a datum representative of an air parameter, for an aircraft,
comprising a plurality of sources (12, 14, 16, 18; 32, 34, 36, 44, 46) that are each configured to deliver a datum representative of a measured value of the parameter;
wherein it comprises a selection computer (20, 22; 40, 42) comprising:
- means for determining, for at least certain sources, the number of other sources of the plurality in agreement with the concerned source;
- means for choosing the selected datum from among the data delivered by the sources for which the determined agreement number is maximum;
said selection computer (20, 22; 40, 42) being different from an aircraft engine control computer (24, 26; 44, 46) for which the selected datum is intended.

2. The system for selecting according to claim 1, wherein another source is in agreement with the concerned source if the absolute value of the difference between the datum delivered by the concerned source and the datum delivered by the other source is less than a predetermined threshold.

3. The system for selecting according to claim 1 or 2, wherein the means for choosing the selected datum are configured to be inactive when said means for determining identify four sources in agreement by pairs, the sources of one pair not being in agreement with the sources of the other pair.

4. The system for selecting according to one of claims 1 to 3, wherein said certain sources (12, 14, 16, 18; 32, 34, 36) are associated with a fuselage of the aircraft.

5. The system for selecting according to one of claims 1 to 4, wherein the sources of the plurality are located at a fuselage of the aircraft.

6. The system for selecting according to one of claims 1 to 4, wherein at least one of the sources of the plurality is located at an engine (Engine 1, Engine 2) of the aircraft.

7. A system for controlling an aircraft engine, comprising:
- a system for selecting a datum according to one of claims 1 to 6;
- means for determining an instruction for controlling the engine according to the selected datum.

8. An aircraft comprising a system according to one of claims 1 to 7.

9. A method for selecting a datum representative of an air parameter for an aircraft from among a plurality of data each representative of a measured value of the parameter and delivered by a respective plurality of sources (12, 14, 16, 18; 32, 34, 36, 44, 46), **characterized by** the following steps which are carried out in a selection computer (20, 22; 40, 42) which is different from an aircraft engine control computer (24, 26; 44, 46) for which the selected datum is intended:
- determining, for at least certain sources, the number of other sources of the plurality in agreement with the concerned source (E202, E402);
- choosing the selected datum from among the data delivered by the sources for which the determined agreement number is maximum.

10. The method according to claim 9, wherein the choosing step is not implemented when the determining step identifies four sources in agreement by pairs, the sources of one pair not being in agreement with the sources of the other pair.
